# FASCICULE DE BREVET EUROPEEN

(11) **EP 0 559 501 B1**
(45) Date de publication et mention de la délivrance du brevet: **27.12.1995**
(21) Numéro de dépôt: 93400157.9
(22) Date de dépôt: 22.01.1993
(51) Int. Cl.: H01S 3/034, H01S 3/08, H01S 3/04

(54) **Laser de puissance à fenêtre diamant non revêtue**
Unbeschichtetes Diamant-Laserfenster
Non-coated diamond laser window

(30) Priorité: 02.03.1992 FR 9202437
(43) Date de publication de la demande: 08.09.1993
(73) Titulaire: L'AIR LIQUIDE, SOCIETE ANONYME POUR L'ETUDE ET L'EXPLOITATION DES PROCEDES GEORGES CLAUDE, 75321 Paris Cédex 07 (FR)
(72) Inventeur: Marie, Bruno, F-78310 Maurepas (FR); Guerin, Daniel, Résidence du Val Fleury, F-77500 Chelles (FR); Larquet, Christian, F-78280 Guyancourt (FR)
(74) Mandataire: Le Moenner, Gabriel

(56) Documents cités:
- WO-A-89/08856
- US-A- 3 895 313
- US-A- 4 536 442
- JOURNAL OF THE OPTICAL SOCIETY OF AMERICA,vol. 64, no. 1, Janvier 1974, pages 36 - 38;D.H.DOUGLAS-HAMILTON et al.:"Diamond as a high-power-laser window"
- APPLIED OPTICS,vol. 13, no. 11, Novembre 1974, pages 2647 - 2650;T.T.SAITO et al.: "Performance characteristics of single point diamond machined metal mirrors for infrared laser applications"

## Description

La présente invention concerne les lasers de puissance comprenant une cavité optique délimitée à ses extrémités opposées par une première fenêtre, partiellement transmettante, et par une deuxième fenêtre, réfléchissante.

Les fenêtres (également appelées miroirs) constituent un des points faibles des lasers de puissance. En effet, dès qu'une particule se dépose sur elles, elle absorbe le rayonnement et le retransmet par conduction à la fenêtre. L'échauffement local qui en résulte entraîne généralement la destruction de la fenêtre. On considère ainsi que, dans des conditions de propreté particulièrement soignées, 20-30 kW/cm² constitue une valeur limite du flux de rayonnement admissible sur les fenêtres actuelles. Dans le cas des lasers CO₂, où le coefficient de réflexion de la fenêtre partiellement transmettante est en général compris entre 50 et 90 %, les fenêtres transmettantes sont constituées d'un substrat qui est généralement ZnSe, éventuellement AsGa, avec des revêtements multicouches assurant le bon coefficient de transmission, les fenêtres réfléchissantes étant généralement constituées par un substrat en germanium traité ou des miroirs métalliques, notamment en cuivre, avec traitement de protection.

La présente invention a pour objet de proposer des structures de fenêtres pour lasers de puissance, notamment à CO₂, de configuration simple et robuste, offrant une durée de vie considérablement accrue, autorisant une grande souplesse de détermination des coefficients de réflexion et/ou de transmission et convenant tout particulièrement aux faisceaux lasers de puissance de très petites dimensions, tels que les lasers guide-d'ondes et en particulier les lasers à galeries chuchotantes qui présentent des densités de puissance importantes sur les optiques.

Pour ce faire, selon une caractéristique de l'invention, la première fenêtre est constituée d'au moins une lame en diamant à faces planes parallèles non revêtues ayant une épaisseur contrôlée, les variations d'épaisseur n'excédant pas 0,2 micron.

Selon un mode de réalisation de l'invention, la lame en diamant est montée dans un support annulaire en matériau bon conducteur de la chaleur, avantageusement associé à un moyen de refroidissement.

Selon un autre mode de réalisation de l'invention, la fenêtre comporte deux lames en diamant parallèles séparées d'une distance calibrée, qui est typiquement un multiple impair de λ/4n, λ étant la longueur d'ondes laser et n l'indice du milieu intercalaire entre les deux lames.

D'autres caractéristiques et avantages de la présente invention ressortiront de la description suivante de modes de réalisation, donnée à titre illustratif mais nullement limitatif, faite en relation avec les dessins annexés, sur lesquels :
- la figure 1 est une vue schématique en coupe longitudinale d'un laser de puissance CO₂ selon l'invention ; et
- la figure 2 est une vue en coupe d'une variante d'une fenêtre partiellement transmettante selon l'invention.

Dans la description qui va suivre et sur les dessins, les éléments identiques ou analogues portent les mêmes chiffres de référence, éventuellement indicés.

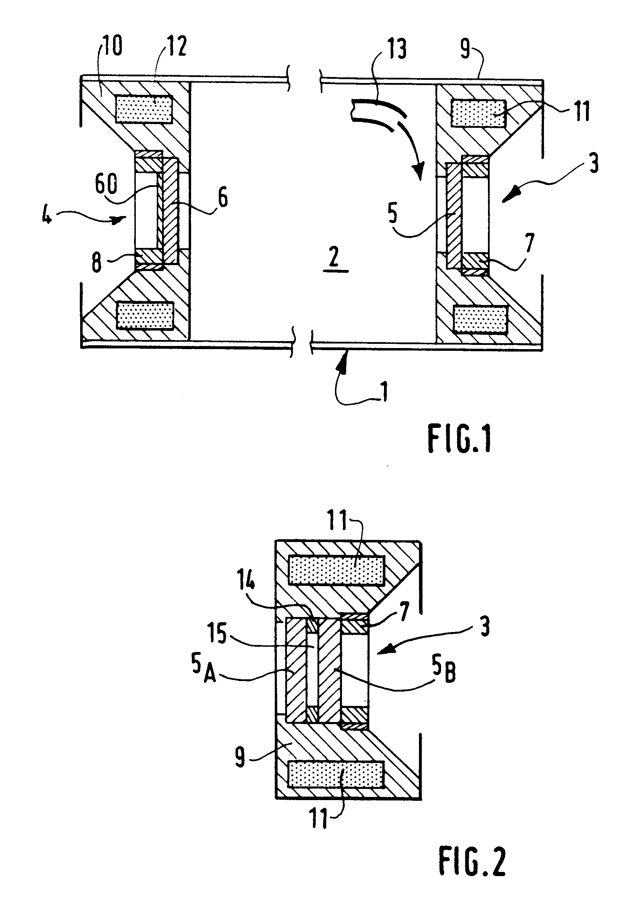

On a représenté sur la figure 1 un laser de puissance CO₂ 1 comprenant une cavité optique 2 délimitée, à ses extrémités opposées, par une première fenêtre, partiellement transmettante, 3, et par une seconde fenêtre 4 réfléchissante. La première fenêtre 3 et la seconde fenêtre 4 sont chacune constituées par une lame en diamant à faces planes parallèles 5, 6, respectivement, réalisées en diamant C-II-A dont l'absorption à 10,6 microns (longueur d'onde du laser CO₂) est très faible (de l'ordre de 0,03 cm⁻¹) et dont la conductivité thermique est considérable (2000 W/m/K) en comparaison avec celles du cuivre (380/W/m/K) et de ZnSe (18 W/m/K). Un tel support est capable d'éviter un échauffement local en présence d'une poussière : une particule de 10 microns soumise à un flux de 200 KW/cm² occasionnera une élévation de température de seulement 5°C au point le plus chaud. L'épaisseur des lames 5, 6, est supérieure à 150 microns et inférieure à 1 mm.

Selon l'invention, afin de ne pas avoir à déposer des traitements multicouches, la lame 5 de la première fenêtre 3 a une épaisseur parfaitement contrôlée, les variations d'épaisseur n'excédant pas 0,2 micron, de façon à profiter de l'effet d'interférence selon le principe de l'interféromètre de Fabry-Pérot. Ainsi, avec λ = 10,6 microns, la réflexion sur une face est de l'ordre de 17 %, la réflexion sur deux faces étant de l'ordre de 34 %. Si les deux faces sont parfaitement planes et parallèles (variations d'épaisseur n'excédant pas 0,1 micron), le coefficient de transmission effectif de la lame variera de 100 %, si son épaisseur est un multiple de λ/2nᵢ, à 48,8 % si l'épaisseur est un multiple impair de λ/4nᵢ, λ étant la longueur d'onde laser et nᵢ l'indice du diamant de la lame, en l'occurrence 2,37.

L'expérience montre que, dans le cas de forts coefficients de réflexion, ces derniers sont assez peu sensibles à l'épaisseur de la lame : avec un coefficient de réflexion maximum de 48,8 %, une augmentation de l'épaisseur de la lame de 0,1 micron entraîne une baisse du coefficient à 48,4 % alors qu'une variation de 0,2 micron de l'épaisseur de la lame entraîne une baisse du coefficient à 47 %. L'expérience montre d'autre part, dans le cas d'une lame de 250 microns d'épaisseur, qu'il faudrait une élévation de température de 100°C pour entraîner une modification de 1 % (relatif) du coefficient de réflexion. Selon un aspect de l'invention, le coefficient de dilatation du diamant est pour sa part trop faible pour avoir une quelconque influence.

La lame 6 de la seconde fenêtre 4 comporte un revêtement d'une mince couche d'or 60.

Pour exploiter l'exceptionnelle conductivité thermique du diamant, les lames 5 et 6 sont chacune montées, par exemple par une bague de serrage axial 7, 8, ou par brasage avec dépôt préalable d'une couche métallique sur la périphérie de la lame, dans un support annulaire 9, 10, respectivement, en matériau bon conducteur de la chaleur, par exemple en cuivre et comportant chacun un moyen de refroidissement, par exemple un circuit 11, 12, respectivement, de circulation d'eau ou de gaz. Pour les applications considérées, le diamètre des lames 5, 6, n'excède pas 7 mm. La grande résistance à l'abrasion du diamant permet d'installer un dispositif 13 provoquant, dans la cavité 2, un balayage d'au moins une des fenêtres par un flux de gaz qui empêchera le dépôt de particules sur la fenêtre sans risques particuliers de voir cette fenêtre rayée par les particules éventuellement en suspension dans le gaz de balayage. Cet avantage est particulièrement exploitable dans le cas des lasers à flux rapide où l'on pourra alors utiliser le flux de gaz lasant.

Dans le mode de réalisation de la figure 1, l'utilisation d'une seule lame 5 dans la première fenêtre 3 ne permet pas de dépasser une réflexion de 49 %. Dans le mode de réalisation de la figure 2, la fenêtre 3 comporte deux lames calibrées en diamant 5_{A}, 5_{B}, ayant chacune un coefficient de réflexion d'environ 48 %, séparées l'une de l'autre, par exemple par une bague métallique calibrée 14 ou un dépôt métallique annulaire d'épaisseur contrôlée ménageant entre les lames une couche intermédiaire 15, par exemple d'air ou d'un gaz, ayant une épaisseur qui est un multiple impair de λ/4nᵢ, nᵢ étant l'indice du milieu intercalaire 15. En jouant sur les coefficients de réflexion de chacune des lames 5_{A}, 5_{B}, et/ou sur l'épaisseur de la couche intermédiaire 15, on obtient un système dont le coefficient de réflexion peut aller de 0 à 88 %. Par exemple, avec une lame 5_{A} d'épaisseur 251 microns et une lame 5_{B} d'épaisseur 240 microns séparées par un interstice 15 de 602 microns, on obtient un coefficient de réflexion de 80 %.

Une propriété intéressante des fenêtres selon l'invention est qu'elles peuvent aussi assurer une fonction de filtre de longueurs d'ondes. En effet, les lasers CO₂ peuvent émettre à de nombreuses longueurs d'ondes. Pour certaines applications, notamment les mesures de pollution dans l'atmosphère, on peut être amené à vouloir obtenir l'effet laser sur une seule raie, en particulier sur une raie qui ne soit pas la raie P(20). Actuellement la sélection de raies s'opère en utilisant un réseau et un miroir partiellement transmettant en guise de fenêtre réfléchissante 6. En choisissant correctement l'épaisseur de la lame transmettante 5, on peut défavoriser certaines raies au profit d'une autre. Par exemple, en choisissant l'épaisseur de la lame transmettante 5 de façon que celle-ci soit un multiple impair de λ₁/4n et un multiple pair de λ2/4n, on peut éliminer la raie λ₂ au profit de la raie λ₁. Ainsi, si l'on souhaite favoriser la raie P(18), dont la longueur d'onde est 10,5716 microns, au détriment de la raie P(20) dont la longueur d'onde est 10,5915 microns, on peut prendre une lame d'épaisseur 595,5 microns, dont le coefficient de réflexion vaut 48,6 % pour la raie P(18) et 0,02 % pour la raie P(20).

Quoique la présente invention ait été décrite en relation avec des modes de réalisation particuliers, elle ne s'en trouve pas limitée pour autant mais est au contraire susceptible de modifications et de variantes qui apparaîtront à l'homme de l'art.

## Revendications

1. Laser de puissance à gaz comprenant une cavité optique (2) délimitée, à ses extrémités opposées, par une première fenêtre (3), partiellement transmettante, et une deuxième fenêtre (4), réfléchissante, caractérisé en ce que la première fenêtre (3) est constituée d'au moins une lame en diamant (5) à faces planes parallèles non revêtues, ayant une épaisseur contrôlée supérieure à 150 microns et inférieure à 1 mm et dont les variations n'excèdent pas 0,2 micron.

2. Laser selon la revendication 1 caractérisé en ce que la lame en diamant (5 ; 6) est montée dans un support annulaire (9 ; 10) en matériau bon conducteur de la chaleur et associé à un moyen de refroidissement (11 ; 12).

3. Laser selon l'une des revendications 1 à 2, caractérisé en ce que la fenêtre (3) comporte deux lames parallèles (5_{A}, 5_{B}) en diamant séparées d'une distance calibrée (14).

4. Laser selon la revendication 3, caractérisé en ce que la distance calibrée (14) est un multiple impair de λ/4n, λ étant la longueur d'onde laser et n l'indice du milieu intercalaire entre les lames.

5. Laser selon l'une des revendications 1 à 4, caractérisé en ce que la deuxième fenêtre (4) est constituée d'une lame en diamant (6) avec un revêtement métallique réfléchissant (60).

6. Laser à gaz selon l'une des revendications précédentes, caractérisé en ce qu'il comporte, dans la cavité (2), des moyens (13) de circulation d'un gaz de balayage sur la face interne d'au moins une des fenêtres.

7. Laser CO₂ selon l'une des revendications précédentes, caractérisé en ce que le diamant des lames (5 ; 6) est C-II-A.

8. Laser selon la revendication 7, caractérisé en ce que l'épaisseur des lames (5, 6) n'excède pas 0,5 mm.

## Patentansprüche

1. Leistungs-Gaslaser mit einem optischen, an seinen gegenüberliegenden Seiten durch ein erstes, teildurchlässiges Fenster (3) und durch ein zweites, reflektierendes Fenster (4) begrenzten Resonator (2), dadurch gekennzeichnet, daß das erste Fenster (3) aus zumindest einer planparallelen, unbeschichteten Diamantplatte (5) besteht, deren gemessene Dicke mehr als 150 »m und weniger als 1 mm beträgt, und deren Maßabweichung 0,2 »m nicht übersteigt.

2. Laser nach Anspruch 1, dadurch gekennzeichnet, daß die Diamantplatte (5, 6) in einem ringförmigen, aus gut wärmeleitendem Material bestehenden und mit einem Kühlmittel (11, 12) verbundenen Träger angeordnet ist.

3. Laser nach einem der Ansprüche 1 oder 2, dadurch gekennzeichnet, daß das Fenster (3) zwei parallele, durch einen festgelegten Abstand (14) getrennte Diamantplatten (5_{A}, 5_{B}) umfaßt.

4. Laser nach Anspruch 3, dadurch gekennzeichnet , daß der festgelegte Abstand (14) ein ungeradzahliges Vielfaches von λ/4n ist, wobei λ die Wellenlänge des Lasers und n die Kennzahl eines zwischen den Platten eingefügten Mediums ist.

5. Laser nach einem der Ansprüche 1 bis 4, dadurch gekennzeichnet, daß das zweite Fenster (4) aus einer Diamantplatte (6) mit einer reflektierenden Metallbeschichtung besteht.

6. Gaslaser nach einem der vorangehenden Ansprüche, gekennzeichnet durch in dem Resonator (2) angeordnete Mittel (13) zur Umwälzung eines Spülgases auf der Innenseite zumindest eines der Fenster.

7. CO₂-Laser nach einem der vorangehenden Ansprüche, dadurch gekennzeichnet, daß der Diamant auf den Platten 5, 6) aus C-II-A besteht.

8. Laser nach Anspruch 7, dadurch gekennzeichnet, daß die Dicke der Platten (5, 6) 0,5 mm nicht überschreitet.

## Claims

1. High-energy gas laser comprising an optical cavity (2) delimited, at its opposite ends, by a first, partially transmitting, window (3), and a second, reflective, window (4), characterised in that the first window (3) consists of at least one diamond plate (5) with uncoated parallel plane faces, having a controlled thickness greater than 150 microns and less than 7 mm and whose variations do not exceed 0.2 microns.

2. Laser according to Claim 1, characterised in that the diamond plate (5; 6) is mounted in an annular support (9; 10) made of a material that is a good conductor of heat and is associated with cooling means (11; 12).

3. Laser according to one of Claims 1 and 2, characterised in that the window (3) has two parallel diamond plates (5_{A}, 5_{B}), separated by a calibrated distance (14).

4. Laser according to Claim 3, characterised in that the calibrated distance (14) is an odd multiple of λ/4n, λ being the laser wavelength and n the index of the intervening medium between the plates.

5. Laser according to one of Claims 1 to 4, characterised in that the second window (4) consists of a diamond plate (6) having a reflective metal coating (60).

6. Gas laser according to one of the preceding claims, characterised in that it has, in the cavity (2), means (13) for circulating a scavenging gas over the internal face of at least one of the windows.

7. CO₂ laser according to one of the preceding claims, characterised in that the diamond of the plates (5; 6) is C-II-A.

8. Laser according to Claim 7, characterised in that the thickness of the plates (5, 6) does not exceed 0.5 mm.
